# EUROPEAN PATENT APPLICATION

(11) **EP 4 254 619 A1**
(43) Date of publication of application: **04.10.2023**
(21) Application number: 22771809.5
(22) Date of filing: 18.03.2022
(51) Int. Cl.: H01M 50/178, H01M 50/184, H01M 50/35, H01M 50/30, H01M 50/557, H01M 10/052, H01M 50/358, H01M 50/383

(54) **BATTERY MODULE AND BATTERY PACK INCLUDING SAME**

(30) Priority: 18.03.2021 KR 20210035358; 22.03.2021 KR 20210036925; 25.01.2022 KR 20220010585
(71) Applicant: LG Energy Solution, Ltd., Seoul 07335 (KR)
(72) Inventor: PARK, Subin, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2022/003805
(87) International publication number: WO 2022/197143

(57) **Abstract**

A battery module according to an embodiment of the present disclosure includes a battery cell stack in which a plurality of battery cells are stacked; a module frame that houses the battery cell stack; and a flame exhaust frame arranged so as to cover one surface of the module frame, wherein the flame exhaust frame is formed in a recessed shape in a direction opposite to the direction in which the one surface of the module frame is located, and wherein a passage part is formed between the flame exhaust frame and the one surface of the module frame, and the passage part extends to a flame exhaust port formed in the flame exhaust frame.

## Description

### [TECHNICAL FIELD]

### Cross Citation with Related Application(s)

This application claims the benefit of Korean Patent Application No. 10-2021-0035358 filed on March 18, 2021, Korean Patent Application No. 10-2021-0036925 filed on March 22, 2021 and Korean Patent Application No. 10-2022-0010585 filed on January 25, 2022 in the Korean Intellectual Property Office, the entire contents of which are incorporated herein by reference.

The present disclosure relates to a battery module and a battery pack including the same, and more particularly to a battery module having enhanced safety and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. One or more battery modules can be mounted together with various control and protection systems such as a BMS (battery management system) and a cooling system to form a battery pack.

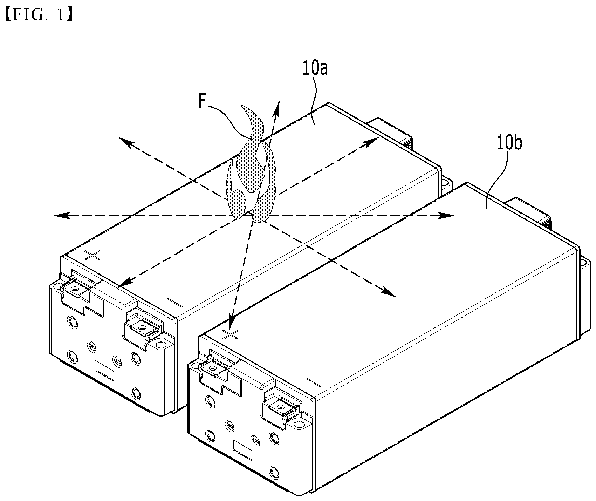

Fig. 1 is a perspective view which shows a conventional battery module.

Referring to Fig. 1, battery modules 10a and 10b including a plurality of battery cells are gathered together and can be mounted on a middle- or large-sized device such as an automobile. In the battery modules 10a and 10b equipped with a plurality of battery cells or the battery pack configured to gather a plurality of battery modules 10a and 10b, the heat generated from the large number of battery cells can be added up in a narrow space, so that the temperature can rise more quickly and excessively. In other words, battery modules 10a and 10b in which a large number of battery cells are stacked and a battery pack equipped with these battery modules 10a and 10b can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly arranged to increase the mileage of the vehicle, a thermal runaway phenomenon generated in one battery module 10a can easily propagate to an adjacent battery module 10b, which may eventually lead to ignition or explosion of the battery pack itself.

Therefore, there is a need to design a battery module that can block the propagation of a flame.

### [DETAILED DESCRIPTION OF THE INVENTION]

### [Technical Problem]

It is an object of the present disclosure to provide a battery module that can control the propagation of a flame generated therein to the outside, and a battery pack including the same.

However, the problem to be solved by embodiments of the present disclosure is not limited to the above-described problems, and can be variously expanded within the scope of the technical idea included in the present disclosure.

### [Technical Solution]

According to an aspect of the present disclosure, there is provided a battery module comprising: a battery cell stack in which a plurality of battery cells are stacked; a module frame that houses the battery cell stack; and a flame exhaust frame arranged so as to cover one surface of the module frame, wherein the flame exhaust frame is formed in a recessed shape in a direction opposite to the direction in which the one surface of the module frame is located, and wherein a passage part is formed between the flame exhaust frame and the one surface of the module frame, and the passage part continues to a flame exhaust port formed in the flame exhaust frame.

A through hole may be formed in the one surface of the module frame, and the passage part may continue from the through hole to the flame exhaust port.

The battery module may further comprise a flame extinguishing member that is located between the one surface of the module frame and the flame exhaust frame, wherein the through hole may be in contact with the flame extinguishing member.

The passage part may be bent at least once to extend to the flame exhaust port.

The module frame may have a shape in which both sides facing each other are opened, and a first end plate and a second end plate may be respectively arranged to cover the open both sides of the module frame.

A first through hole and a second through hole may be formed in the one surface of the module frame, the passage part may continue from the first through hole and the second through hole to the flame outlet, and the first through hole may be located adjacent to the first end plate, and the second through hole may be located adjacent to the second end plate.

The battery cell may include electrode leads, any one of the electrode leads may protrude toward the first end plate, and the other of the electrode leads may protrude toward the second end plate.

The flame exhaust frame may extend to a side surface of the first end plate and a side surface of the second end plate.

A through hole may be formed to at least one part of a side surface of the first end plate or a side surface of the second end plate, and the passage part may continue from the through hole to the flame exhaust port.

The battery module may further comprise a flame extinguishing member that is located between the one surface of the module frame and the flame exhaust frame, wherein the through hole may be in contact with the flame extinguishing member.

A partition wall part may be formed to at least one part of the flame exhaust frame or the one surface of the module frame, and a path formed by the passage part may extend while being bent in plural numbers by the partition wall part.

The battery module may further comprise a flame extinguishing member that is located between the one surface of the module frame and the flame exhaust frame, wherein the flame extinguishing member may have a multi-layered flame extinguishing network structure.

The battery module may further comprise a heat sink located below the bottom part of the module frame, wherein a flow path through which a coolant flows may be formed between the bottom part of the module frame and the heat sink.

The module frame may include module frame protrusions that protrude in one direction from the bottom part of the module frame. A coolant injection port for supplying a coolant to the heat sink may be formed in any one of the frame protrusions, and a coolant discharge port for discharging the coolant from the heat sink may be formed in the other one of the module frame protrusion parts.

The flame exhaust port may be formed in an opened shape in a direction opposite to the one direction in which the module frame protrusion protrudes.

### [Advantageous Effects]

According to an embodiment of the present disclosure, a separate flame exhaust path is provided in the battery module, so that even if a flame occurs inside the battery module, it is possible to block the propagation of frames to the outside. It is possible to suppress or delay the propagation of flames generated in one battery module to other battery modules or other electronic devices. That is, it is possible to increase the safety of the battery module and the battery pack against the occurrence of fire.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view which shows a conventional battery module;
Fig. 2 is a perspective view which shows a battery module according to an embodiment of the present disclosure;
Fig. 3 is an exploded perspective view of the battery module of Fig. 2;
Fig. 4 is a perspective view which shows one of the battery cells included in the battery module of Fig. 3;
Fig. 5 is a perspective view of a flame exhaust frame and an upper plate included in the battery module of Fig. 3;
Fig. 6 is a cross-sectional view which shows a cross-section taken along the cutting line A-A' of Fig. 5;
Fig. 7 is a perspective view of a flame exhaust frame and an upper plate according to another embodiment of the present disclosure;
Fig. 8 is a plan view of the flame exhaust frame and the upper plate of Fig. 7 as viewed from the "B" direction;
Figs. 9 and 10 are perspective views which show flame exhaust frames according to modified embodiments of the present disclosure;
Fig. 11 is a perspective view which shows a heat sink included in the battery module of Fig. 3;
Fig. 12 is a perspective view which shows a lower frame, a first thermal conductive resin layer, and a second thermal conductive resin layer included in the battery module of Fig. 3;
Fig. 13 is a perspective view which shows a battery pack according to an embodiment of the present disclosure;
Fig. 14 is a perspective view of a battery module according to another embodiment of the present disclosure;
Fig. 15 is an exploded perspective view of the upper part of the battery module of Fig. 14;
Fig. 16 is an exploded perspective view of a part of the battery module excluding the upper part in Fig. 15;
Fig. 17 is a top view which shows an upper portion of the battery module of Fig. 14;
Fig. 18 is a perspective view of a battery module according to another embodiment of the present disclosure;
Fig. 19 is an exploded perspective view which shows a side surface of the battery module of Fig. 18; and
Fig. 20 is a side view which shows a side surface of the battery module of Fig. 18.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

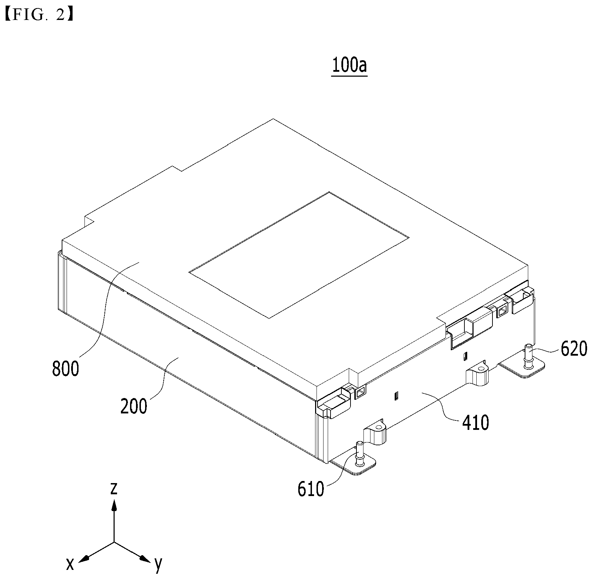

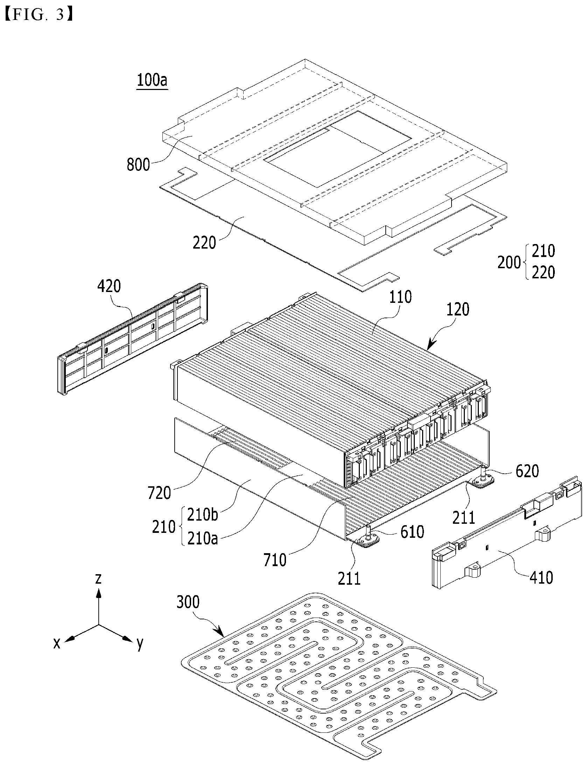

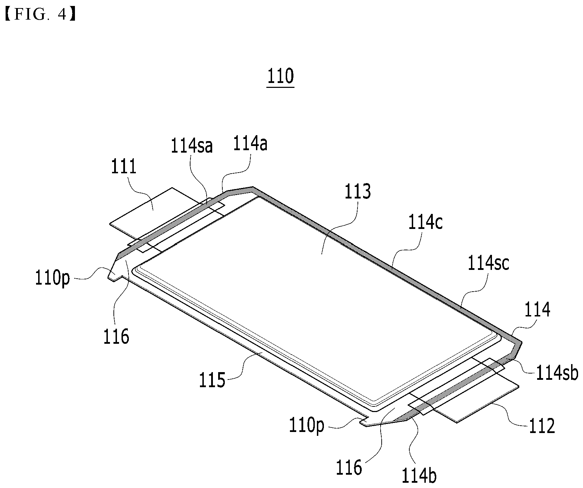

Fig. 2 is a perspective view which shows a battery module according to an embodiment of the present disclosure. Fig. 3 is an exploded perspective view of the battery module of Fig. 2. Fig. 4 is a perspective view which shows one of the battery cells included in the battery module of Fig. 3.

Referring to Figs. 2 to 4, a battery module 100a according to one embodiment of the present disclosure includes a battery cell stack 120 in which a plurality of battery cells 110 are stacked; a module frame 200 that houses the battery cell stack 120; and a flame exhaust frame 800 that is arranged so as to cover one surface of the module frame 200.

First, the battery cell 110 is preferably a pouch-type battery cell, and can be formed in a rectangular sheet-like structure. For example, the battery cell 110 according to the present embodiment has a structure in which two electrode leads 111 and 112 face each other and protrude from one end part 114a and the other end part 114b of the cell main body 113, respectively. That is, the battery cell 110 includes electrode leads 111 and 112 that are protruded in directions facing each other. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

In addition, the connection part 115 may extend long along one edge of the battery cell 110, and a bat-ear 110p may be formed at an end part of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 includes a terrace part 116 formed to extend from the cell case 114 in the direction in which the electrode leads 111 and 112 protrude.

The battery cell 110 may be composed by a plurality of numbers, and the plurality of battery cells 110 may be stacked so as to be electrically connected to each other, thereby forming a battery cell stack 120. In one example, the plurality of battery cells 110 can be stacked along the x-axis direction as illustrated in Fig. 3. Thereby, the electrode leads 111 and 112 may be protruded in the x-axis direction and the -y-axis direction, respectively. Although not specifically illustrated, an adhesive member may be located between the battery cells 110. Thereby, the battery cells 110 may be adhered to each other to form the battery cell stack 120.

The battery cell stack 120 according to the present embodiment may be a large-area module in which the number of battery cells 110 is increased compared to a conventional case. Specifically, 32 to 48 battery cells 110 may be included per battery cell stack. In the case of such a large-area module, the length in a horizontal direction of the battery module becomes long. Here, the length in a horizontal direction may mean a length in the direction in which the battery cells 110 are stacked, that is, in a direction parallel to the x-axis.

Meanwhile, when charge and discharge of the battery cells 110 are repeatedly performed, heat is generated. Even among them, a great amount of heat generates in a portion adjacent to the electrode leads 111 and 112. That is, as it approaches to the terrace part 116 rather than the central portion of the cell main body 113, more heat is generated during the charge and discharge.

The module frame 200 may include a lower frame part 210 that covers the lower surface and both side surfaces of the battery cell stack 120, and an upper frame part 220 that covers the upper part of the battery cell stack 120.

The lower frame 210 covers the lower surface and both side surfaces of the battery cell stack 120. Specifically, the lower frame 210 may include a bottom part 210a and two side surface parts 210b continuing upward from both end parts of the bottom part 210a. The bottom part 210a may cover the lower surface of the battery cell stack 120, and the two side surface part 210b may cover both side surfaces of the battery cell stack 120. Here, the lower surface of the battery cell stack 120 refers to a surface in the -z-axis direction, and both side surfaces of the battery cell stack 120 refer to surfaces in the x-axis and -x-axis directions. However, these are surfaces mentioned for convenience of explanation, and may vary depending on the position of a target object or the position of the observer.

The upper plate 220 covers the upper surface of the battery cell stack 120. Here, the upper surface of the battery cell stack 120 refers to a surface in the z-axis direction. The upper plate 220 and the lower frame 210 can be joined by welding or the like in a state in which the corresponding corner portions are in contact with each other, thereby forming a structure that covers the battery cell stack 120 vertically and horizontally. It is possible to physically protect the battery cell stack 120 through the upper plate 220 and the lower frame 210.

Meanwhile, the battery module 100a according to the present embodiment may further include a first end plate 410 and a second end plate 420. The module frame 200 may has a shape in which both sides facing each other are opened, and the first end plate 410 and the second end plate 420 may be respectively arranged so as to cover the opened both sides of the module frame 200.

Specifically, the first end plate 410 may cover the front surface of the battery cell stack 120, and the second end plate 420 may cover the rear surface of the battery cell stack 120. Here, the front surface of the battery cell stack 120 refers to a surface in the y-axis direction, and the rear surface of the battery cell stack 120 refers to a surface in the -y-axis direction. Further, from the viewpoint of the battery cells 110 and the electrode leads 111 and 112, any one of the electrode leads 111 and 112 protrudes toward the first end plate 410, and the other of the electrode leads 111 and 112 may protrude toward the second end plate 420.

The first end plate 410 and the second end plate 420 may be formed so that they are located on both opened sides of the module frame 200 to cover the battery cell stack 120. Each of the first end plate 410 and the second end plate 420 may be joined by welding in a state where the corresponding corners of the module frame 200 are in contact with each other. The first end plate 410 and the second end plate 420 can physically protect the battery cell stack 120 and other electrical components from external impact.

Meanwhile, although not specifically illustrated, a busbar frame to which the busbar is mounted and an insulating cover for electrical insulation, and the like may be located between the battery cell stack 120 and the end plates 410 and 420.

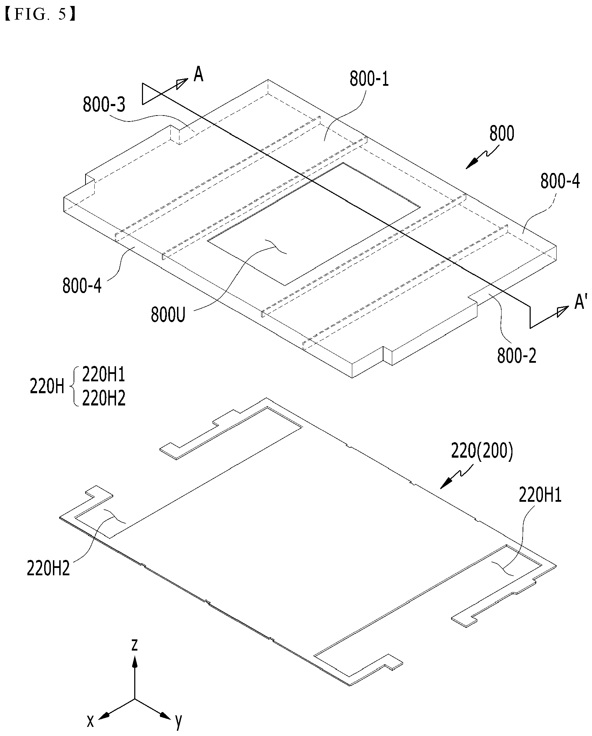

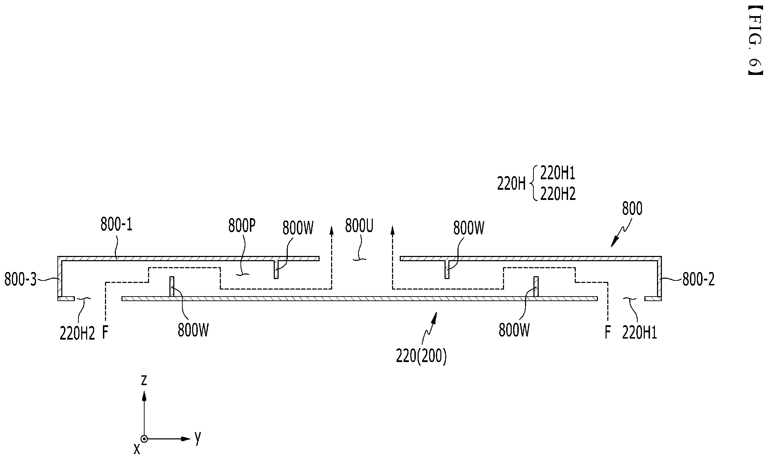

Next, the flame exhaust frame according to the present embodiment will be described in detail with reference to Figs. 5 and 6.

Fig. 5 is a perspective view of a flame exhaust frame and an upper plate included in the battery module of Fig. 3. Fig. 6 is a cross-sectional view which shows a cross-section taken along the cutting line A-A' of Fig. 5. At this time, Fig. 6 shows a state in which the flame exhaust frame 800 and the upper plate 220 of Fig. 5 are in contact with each other.

Referring to Figs. 3, 5 and 6, the flame exhaust frame 800 according to the present embodiment is arranged so as to cover one surface of the module frame 200 as described above. In one example, as illustrated, the flame exhaust frame 800 may be located on the upper plate 220 while covering one surface of the upper plate 220 of the module frame 200. That is, in one embodiment, the one surface of the module frame 200 may correspond to the upper plate 220.

The flame exhaust frame 800 is formed in a recessed shape in a direction opposite to the direction in which the one surface of the module frame 200 is located. A passage part 800P is formed between the flame exhaust frame 800 and the one surface of the module frame 200, and the passage part 800P extends to the flame exhaust port 800U formed in the flame exhaust frame 800.

Here, "the flame exhaust frame 800 is formed in a recessed shape in a direction opposite to the direction in which the one surface of the module frame 200 is located" means that the flame exhaust frame 800 is a frame in which a surface in the direction where the one surface of the module frame 200 is located is opened. In one example, the flame exhaust frame 800 may include an upper surface 800-1, a front surface 800-2, a rear surface 800-3 and both side surfaces 800-4, and the lower surface may have an opened shape.

A through hole 220H may be formed in the one surface of the module frame 200. Specifically, a through hole 220H may be formed in the upper plate 220 of the module frame 200. The through hole 220H is opened toward the battery cell stack 120, and the passage part 800P may continue from the through hole 220H to the flame exhaust port 800U. The flame exhaust frame 800 according to the present embodiment is not simply an opened frame, but a member provided with a passage part 800P through which the flame F can move therein. Flames F generated from the battery cell stack 120 of the battery module 100a and the like flows into the passage part 800P between the flame exhaust frame 800 and the one surface of the module frame 200 through the through hole 220H. The flame F moved along the passage part 800P is exhausted to the outside through the flame exhaust port 800U.

The flame exhaust port 800U is opened toward the outside of the battery module 100a. Specifically, the flame exhaust port 800U is formed in at least one part of the upper surface 800-1, the front surface 800-2, the rear surface 800-3 or both side surfaces 800-4 of the flame exhaust frame 800. In one example, Figs. 5 and 6 show that the flame exhaust port 800U is formed on the upper surface 800-1 of the flame exhaust frame 800.

Corresponding edges between the flame exhaust frame 800 and the one surface of the module frame 200 may be joined to each other.

The upper plate 220 may be a plate-shaped member in which the through hole 220H is formed. The upper plate 220 can be joined to the opened lower surface of the flame exhaust frame 800 to form a passage part 800P of the flame exhaust frame 800. The joining method is not particularly limited, and weld-joining can be used as an example. A space between the flame exhaust frame 800 and the upper plate 220 may be configured as a passage part 800P through which flames F move.

Meanwhile, the through hole 220H may include a first through hole 220H1 and a second through hole 220H2. That is, a first through hole 220H1 and a second through hole 220H2 may be formed on the one surface of the module frame 200, and the passage part 800P may extend from the first through hole 220H1 and the second through hole 220H2 to the flame exhaust port 800U.

The first through hole 220H1 may be located adjacent to the first end plate 410, and the second through hole 220H2 may be located adjacent to the second end plate 420. The first through hole 220H1 and the second through hole 220H2 may be located to be spaced apart along the y-axis direction.

As described above, the first end plate 410 and the second end plate 420 may cover the front and rear surfaces of the battery cell stack 120, respectively. At this time, the electrode leads 111 and 112 (see Fig. 4 ) of the battery cell 110 may be located on the front and rear surfaces of the battery cell stack 120. That is, any one of the electrode leads 111 and 112 of the battery cells 110 constituting the battery cell stack 120 protrudes toward the first end plate 410, and the other of the electrode leads 111 and 112 of the battery cell 110 may protrude toward the second end plate 420.

In the battery cell 110, a portion closer to the electrode leads 111 and 112 than to the central portion of the cell main body 113 generates more heat during charge and discharge. Based on the battery cell stack 120, a large amount of heat is generated in a portion adjacent to a portion where the electrode leads 111 and 112 protrude. Thus, a first through hole 220H1 and a second through hole 220H2 may be provided in a portion adjacent to each of the first end plate 410 and the second end plate 420 among the one surface of the module frame 200. That is, the first through hole 220H1 and the second through hole 220H2 may be located so as to be adjacent to portions from which the electrode leads 111 and 112 protrude. The first through hole 220H1 and the second through hole 220H2 may be arranged so as to be adjacent to a portion where a largest amount of heat is generated in the battery cell stack 120, that is, a portion where flames are highly likely to occur.

Meanwhile, the through hole 220H may be extended along the stacking direction of the battery cells 110. Specifically, as illustrated in Fig. 5, the through hole 220H may have an opened shape so as to extend along the x-axis direction parallel to the stacking direction of the battery cells 110. More specifically, each of the first through hole 220H1 and the second through hole 220H2 may has an opened shape so as to extend along the x-axis direction. Therefore, all of the battery cells 110 constituting the battery cell stack 120 may be exposed through the through hole 220H. That is, the through hole 220H is not formed to expose only a part of the battery cells 110, but is opened so as to correspond to all of the battery cells 110. Therefore, even when a flame is generated from any battery cell 110, it easily flows into the flame exhaust frame 800 through the through hole 220H.

Meanwhile, as illustrated in Figs. 5 and 6, the flame exhaust port 800U may be formed on the upper surface 800-1 of the flame exhaust frame 800. At this time, based on a direction perpendicular to the upper surface 800-1 of the flame exhaust frame 800, the through hole 220H and the flame exhaust port 800U may be arranged so as to be dislocated from each other. Here, the direction perpendicular to the upper surface 800-1 of the flame exhaust frame 800 may be a direction parallel to the z-axis.

Specifically, the flame exhaust port 800U may be arranged so as to be dislocated from both the first through hole 220H1 and the second through hole 220H2 with respect to the direction perpendicular to the upper surface 800-1 of the flame exhaust frame 800. In one example, the flame exhaust port 800U may be located in the central portion of the upper surface 800-1 of the flame exhaust frame 800. As the flame exhaust port 800U is arranged so as to be dislocated from the through hole 220H, the passage part 800P may be bent at least once to extend from the through hole 220H to the flame exhaust port 800U.

Due to the above configuration, flames F flowing into the flame exhaust frame 800 are not exhausted directly to the flame exhaust port 800U, but is exhausted after moving along the passage part 800P to some extent. Since sufficient air (oxygen) is not supplied while the flame F moves along the path formed by the passage part 800P, flames F can be weakened or extinguished. That is, a kind of smothering extinguishment effect can be exhibited. Thereby, even if the flames F occurs inside the battery module 100a, it is possible to suppress or delay the propagation of flames to other adjacent battery modules or other electrical equipment. Particularly, when the battery module 100a is included in the battery pack for vehicle, the propagation of flames F can be delayed, and a time margin for a driver to evacuate from a fire or explosion can be secured.

Further, considering the nature of flames or sparks that have a strong propensity to go straight and burst out instantaneously, if the path of the passage part 800P is configured to be bent at least once rather than in a straight line, the direct ejection of flames F can be greatly restricted instead of having no significant effect on gas exhaust.

Meanwhile, as a comparative example for the present disclosure, there may be a configuration in which the end plates of the battery modules themselves are provided with separate flame exhaust paths. Unlike the present embodiment in which a flame exhaust path is provided in the flame exhaust frame 800 covering the upper surface of the battery cell stack 120, if a flame exhaust path is provided on the end plate itself, the path that the flames move is short, and the amount of movable flame is inevitably limited. Because the route is short and the amount of movement is limited, the smothering extinguishment effect is insufficient as compared to the present embodiment. That is, the generated flame cannot be weakened or extinguished, and the possibility of blowing out to the outside of the battery module increases. Unlike the same, the flame exhaust frame 800 according to the present embodiment has the advantage of forming a flame exhaust path having a sufficient length and movement amount.

Meanwhile, within the flame exhaust frame 800, the path formed by the passage part 800P may be continued while being bent in plural numbers. Specifically, the partition wall part 800W may be formed on at least one part of the one surfaces of the flame exhaust frame 800 and the module frame 200. The path formed by the passage part 800P may be bent by the partition wall part 800W and continued in plural numbers. That is, the partition 800W allows flames F to move along a tortuous path.

As long as the path formed by the passage part 800P can be configured to be bent, the number or position of the partition wall part 800W is not particularly limited. As an example, in Figs. 5 and 6, four partition wall parts 800W are provided. Among them, two partition wall parts 800W are connected to the upper surface 800-1 of the flame exhaust frame 800, and the other two partition wall parts 800W are connected to one surface of the module frame 200, that is, the upper plate 220.

By arranging the partition wall part 800W as described above, the path of the passage part 800P can be set more complicatedly. As the exhaust path of flames F becomes more complicated, it is possible to more effectively block the direct exhaust of flames F, which has a strong propensity to go straight, to the outside. Further, since the path along which flames F move becomes longer, the flames F may be weakened or extinguished during movement. That is, the smothering extinguishment effect can be increased. The flame exhaust frame 800 to which the partition wall part 800W is added according to the present embodiment may have an increased flame extinguishing capability.

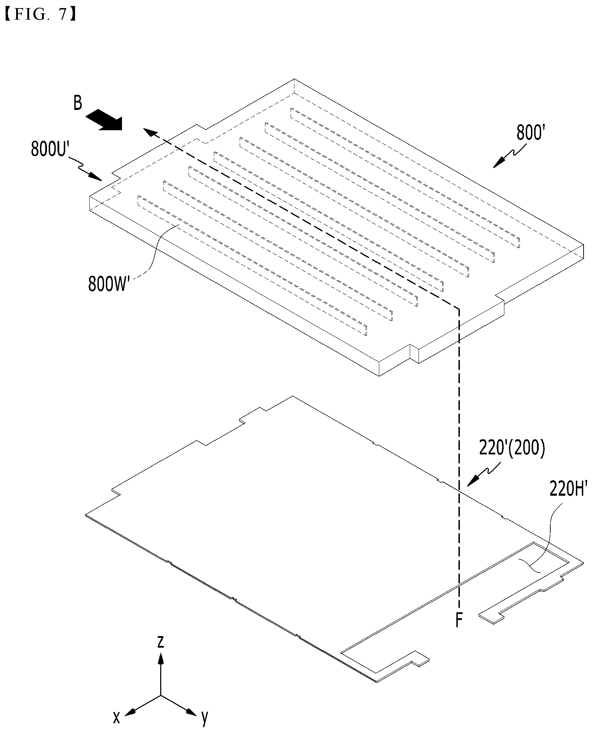

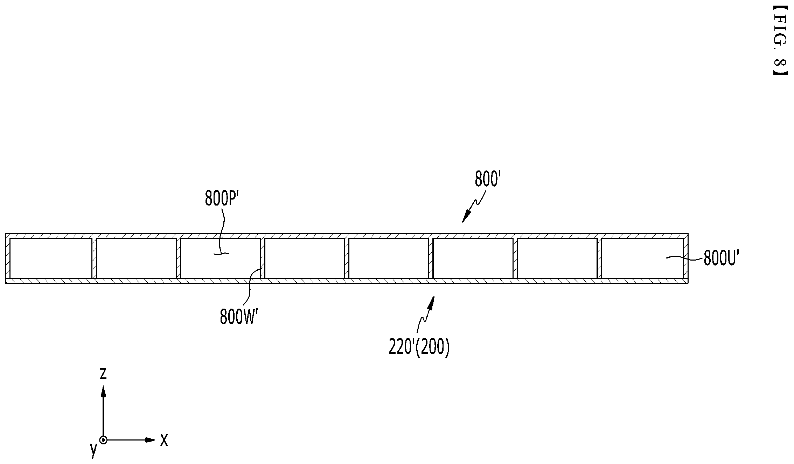

Next, a flame exhaust frame according to another embodiment of the present disclosure will be described in detail with reference to Figs. 7 and 8.

Fig. 7 is a perspective view of a flame exhaust frame and an upper plate according to another embodiment of the present disclosure. Fig. 8 is a plan view of the flame exhaust frame and the upper plate of Fig. 7 as viewed from the "B" direction.

The flame exhaust frame 800' according to another embodiment of the present disclosure is formed in a recessed shape in a direction opposite to the direction in which the one surface of the module frame 200 is located, and a passage part 800P' is formed between the flame exhaust frame 800' and the one surface of the module frame 200. The passage part 800P' extends to the flame exhaust port 800U' formed in the flame exhaust frame 800'.

A through hole 220H' may be formed on the one surface of the module frame 200, particularly, the upper plate 220.

The flame exhaust port according to the present embodiment may be formed in at least one part of the upper surface, the front surface, the rear surface and the side surface of the flame exhaust frame as described above. In Figs. 7 and 8, as an example, a state in which a flame exhaust port 800U' is formed on the rear surface of the flame exhaust frame 800' is illustrated. Here, the rear surface of the flame exhaust frame refers to a surface in the - y-axis direction.

Meanwhile, the flame exhaust frame 800' may include a partition wall part 800W', and a plurality of passage parts 800P' may be formed by the partition wall part 800W'. The number or position of the partition wall part 800W' are not particularly limited. In Figs. 7 and 8, the seven partition wall parts 800W' connected to the flame exhaust frame 800' are illustrated.

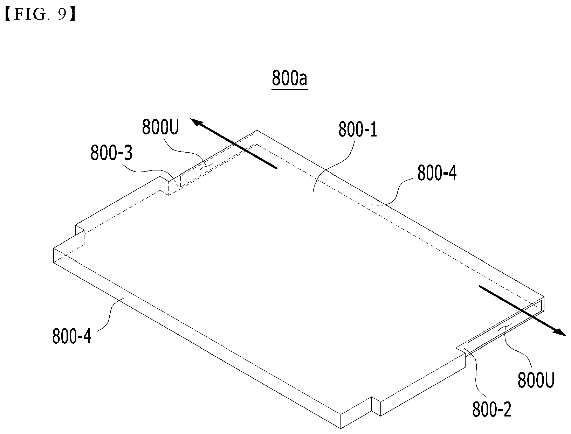

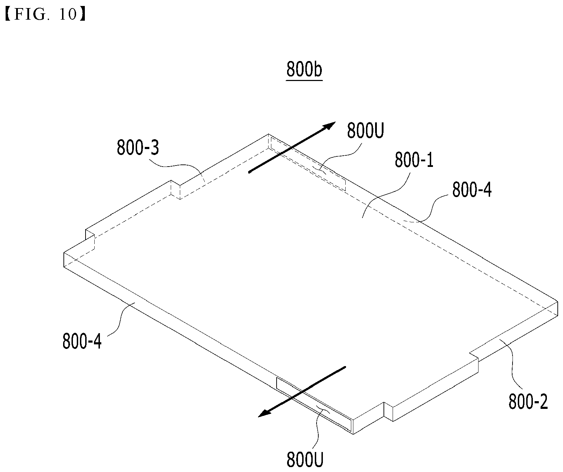

Meanwhile, Figs. 9 and 10 are perspective views which show flame exhaust frames according to modified embodiments of the present disclosure. As described above, the flame exhaust port may be formed to at least one part of an upper surface, a front surface, a rear surface, and a side surface of the flame exhaust frame. Figs. 5 and 6 are examples in which the flame exhaust port is formed on the upper surface of the flame exhaust frame. In the following, various positions of the flame exhaust port according to modified embodiments of the present disclosure will be described in detail with reference to Figs. 9 and 10.

First, referring to Fig. 9, the flame exhaust frame 800a according to a modified embodiment of the present discharge may include flame exhaust ports 800U, and the flame exhaust ports 800U may be respectively formed on the front surface 800-2 and the rear surface 800-3 of the flame exhaust frame 800a. The size and position of the flame exhaust port 800U formed on each of the front surface 800-2 and the rear surface 800-3 are not particularly limited, and can vary depending on the design. As an example, Fig. 9 shows the flame exhaust ports 800U that are disposed at a position biased to one side of the front surface 800-2 or the rear surface 800-3.

Next, referring to Fig. 10, the flame exhaust frame 800b according to a modified embodiment of the present disclosure may include flame exhaust ports 800U, and the flame exhaust ports 800U may be formed on both side surfaces 800-4 of the flame exhaust frame 800b. The size and position of the flame exhaust port 800U formed on both side surfaces 800-4 are not particularly limited, and can vary depending on the design. As an example, any one flame exhaust port 800U in Fig. 10 is formed in a portion close to the front surface 800-2 among one side surfaces 800-4, and another flame exhaust port 800U may be formed in a portion close to the rear surface 800-3 among the other side surface 800-4.

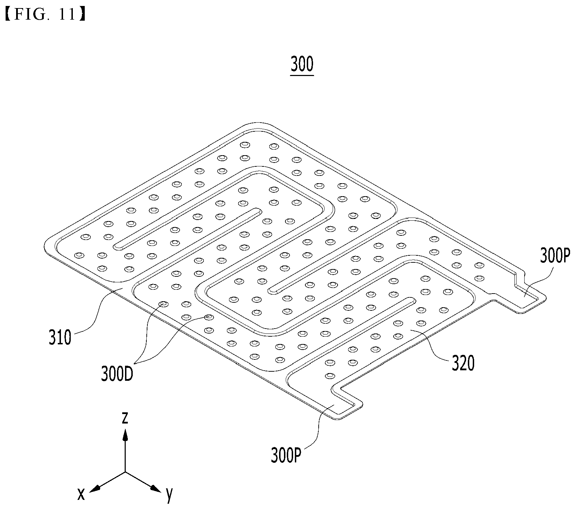

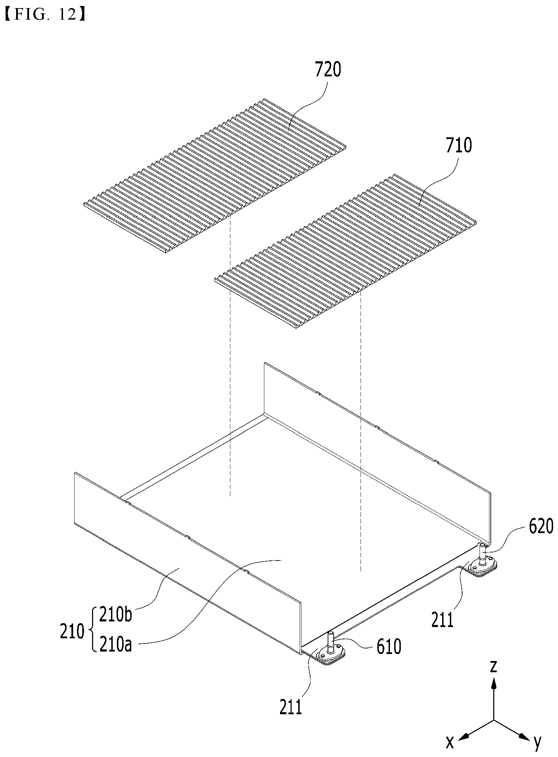

Next, a heat sink and a thermal conductive resin layer according to an embodiment of the present disclosure will be described in detail with reference to Figs. 11 and 12.

Fig. 11 is a perspective view which shows a heat sink included in the battery module of Fig. 3. Fig. 12 is a perspective view which shows a lower frame, a first thermal conductive resin layer, and a second thermal conductive resin layer included in the battery module of Fig. 3.

Referring to Figs. 3, 11 and 12 together, the battery module 100a according to an embodiment of the present disclosure may further include a heat sink 300 located below the bottom part 210a of the module frame 200. The heat sink 300 is a member through which a coolant flows, and may be arranged so as to cool the battery cell stack 120. Meanwhile, the coolant is a medium for cooling, and is not particularly limited, but may be cooling water.

Specifically, the heat sink 300 according to the present embodiment may be located below the bottom part 210a of the lower frame 210. A flow path through which the coolant flows is formed between the heat sink 300 and the bottom part 210a of the lower frame 210.

The heat sink 300 may include a lower plate 310 joined to the bottom part 210a of the lower frame 210 and a depressed part 320 that is depressed downward from the lower plate 310. The lower plate 310 is a portion forming the skeleton of the heat sink 300 and may be directly joined to the bottom part 210a of the lower frame 210 by welding.

The depressed part 320 is a portion that is depressed downward, and may be a tube having a U-shaped cross section cut along the xz plane or the yz plane perpendicular to the direction in which the coolant flow path extends, and the bottom part may be located on the opened upper side of the U-shaped tube 210a. The space between the depressed part 320 and the bottom part 210a becomes a region through which the coolant flows, that is, a flow path of the coolant. Thereby, the bottom part 210a of the lower frame 210 may be in direct contact with the coolant.

The module frame 200 may include module frame protrusions 211 protruding in one direction from the bottom part 210a of the module frame 200. A coolant injection port 610 for supplying a coolant to the heat sink may be formed in any one of the module frame protrusions 211, and a coolant discharge port 620 for discharging the coolant from the heat sink 300 may be formed in the other of the module frame protrusions 211. Meanwhile, the heat sink 300 may include a heat sink protrusion 300P protruding into areas corresponding to each of the module frame protrusions 211.

The coolant that has flowed in through the coolant injection port 610 extends from one side to the other along the path formed by the depressed part 320 and then is discharged through the coolant discharge port 620.

Meanwhile, a protrusion pattern 300D protruding upward may be formed in the depressed part 320. In the case of a large-area battery module in which the number of stacked battery cells increases significantly compared to the conventional case, as in the battery cell assembly 120 according to the present embodiment, the width of the coolant flow path may be formed wider and thus, the temperature deviation may become more severe. The protrusion pattern 300D generates the effect of substantially reducing the width of the cooling flow path, thereby minimizing the pressure drop and at the same time, reducing the temperature deviation between the coolant flow path widths. Therefore, it is possible to realize a uniform cooling effect of the battery cell assembly 120.

The battery module 100a according to the present embodiment may further include a first thermal conductive resin layer 710 and a second thermal conductive resin layer 720 that are located between the lower surface of the battery cell stack 120 and the bottom part 210a of the lower frame 210.

The first thermal conductive resin layer 710 and the second thermal conductive resin layer 720 may include a thermal conductive resin. The thermal conductive resin may be applied to the bottom part 210a of the lower frame 210 to form a first thermal conductive resin layer 710 and a second thermal conductive resin layer 720. The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 120. Further, since the thermal conductive resin has excellent heat transfer properties, it is possible to quickly transfer the heat generated in the battery module 110 to the outside of the battery module 100a and thus prevent the battery module from overheating.

The first thermal conductive resin layer 710 and the second thermal conductive resin layer 720 may be located to be spaced apart from each other in a direction parallel to the direction in which the electrode leads 111 and 112 protrude. As described above, in the battery cell stack 120, the electrode leads 111 and 112 may protrude in the y-axis direction and the -y-axis direction, respectively. The first thermal conductive resin layer 710 and the second thermal conductive resin layer 720 may be located to be spaced apart from each other in a direction parallel to the y-axis in accordance with the protruding directions of the electrode leads 111 and 112. Particularly, the first thermal conductive resin layer 710 and the second thermal conductive resin layer 720 may be located so as to be adjacent to opposite sides of the bottom part 210a of the lower frame 210, respectively.

The battery module 100a according to the present embodiment attempted to concentrate the cooling function and eliminate the temperature deviation of the battery cell 110 by providing the first thermal conductive resin layer 710 and the second thermal conductive resin layer 720 in a portion where heat generation is excessive in the battery cell 110. Thereby, in the battery module 100a according to the present embodiment, heat dissipation can be effectively made at both end parts of the battery cell 110 where heat generation is excessive, and the temperature deviation between the respective portions of the battery cell 110 can be minimized.

Specifically, the heat generated at both ends of the battery cell 110 where heat generation is excessive is sequentially exhausted to the outside through the first thermal conductive resin layer 710 or the second thermal conductive resin layer 720, the bottom part 210a of the lower frame 210 and the heat sink 300.

Meanwhile, in the central portion where the heat generation of the battery cell 110 is relatively weak, the thermal conductive resin is not applied, and thus a kind of air layer may be formed between the battery cell 110 and the bottom part 210a of the lower frame 210. The air layer can function as a heat insulating layer, which can relatively limit heat discharge.

As described above, the degrees of heat discharge for each part of the portion of the battery cell 110 where heat generation is excessive and the portion where heat is insufficient are designed in a different manner, thereby attempting to solve the temperature deviation between portions of the battery cell 110.

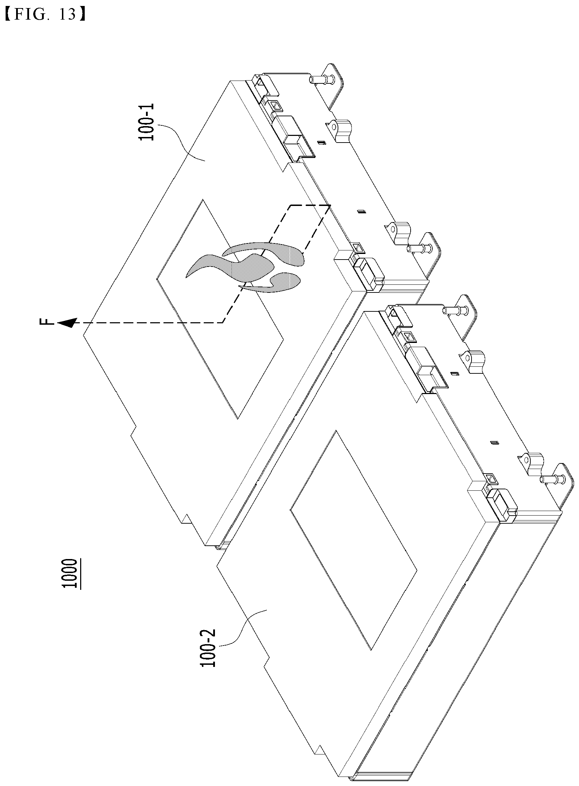

Fig. 13 is a perspective view which shows a battery pack according to an embodiment of the present disclosure.

Referring to Figs. 3 and 13, the battery pack 1000 according to an embodiment of the present disclosure may include battery modules 100-1 and 100-2. The battery modules 100-1 and 100-2 may be configured in plural numbers, and each may include a flame exhaust frame 800.

When flames F occur in any one of the battery modules 100-1, the flames F may be flowed into the flame exhaust frame 800 and exhausted to the outside of the battery module 100-1. Even if the flames F are generated inside one of the battery modules 100-1, it is possible to suppress or delay the propagation of flames to other adjacent battery modules 100-2. Particularly, when the battery pack 1000 according to the present embodiment is arranged in a vehicle, the propagation of flames F can be delayed, and a time margin for a driver to evacuate from a fire or explosion can be secured.

Next, a battery module according to another embodiment of the present disclosure will be described. However, descriptions concerning portions that overlap with those described above will be omitted.

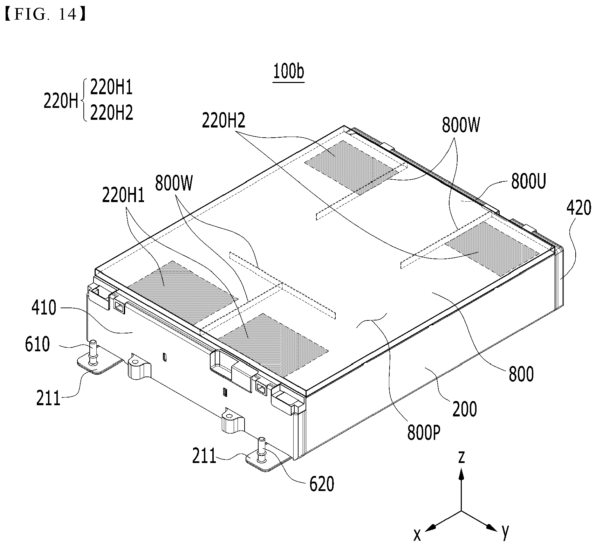

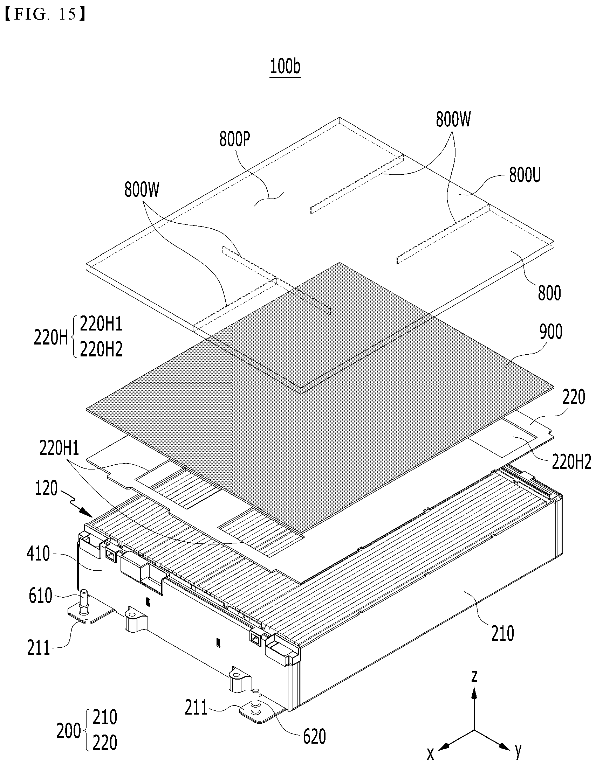

Fig. 14 is a perspective view of a battery module according to another embodiment of the present disclosure. Fig. 15 is an exploded perspective view of the upper part of the battery module of Fig. 14.

Referring to Figs. 14 and 15, the battery module 100b according to an embodiment of the present disclosure includes a battery cell stack 120 in which a plurality of battery cells 110 are stacked; a module frame 200 that houses the battery cell stack 120; and flame exhaust frame 800 arranged so as to cover one surface of the module frame 200.

In addition, the battery module 100b may further include a first end plate 410 and a second end plate 420 that cover the front and rear surfaces of the battery cell stack 120, respectively.

Further, the busbar frame 150 may be arranged between each of the first and second end plates 410 and 420 and the battery cell stack 120. Here, a busbar (not shown) electrically connected to the battery cell stack 120 may be located on the busbar frame 150.

Meanwhile, although not specifically illustrated, an insulating cover that covers the busbar frame 150 and is electrically insulated may be located.

Further, the module frame 200 may include a lower frame 210 of which an upper surface, a front surface and a rear surface are opened, and an upper plate 220 that covers the upper part of the battery cell stack 120. Particularly, the lower frame 210 may include a bottom part 210a that covers the lower surface of the battery cell stack 120 and a side surface part 210b that covers both side surfaces of the battery cell stack 120.

However, the module frame 200 is not limited thereto, and can be replaced with a frame in which one side part is coupled to the upper part of the L-shaped frame, or the central part of the lower part of the mono frame surrounding the battery cell stack 120 excluding the front and rear surfaces is opened.

Further, the battery cell stack 120 is configured so that a plurality of battery cells 110 are stacked in one direction (y-axis direction), and the battery cell 110 is preferably a pouch-type battery cell. Descriptions concerning the battery cells 110 and the battery cell stack 120 overlap with those described above, and thus will be omitted.

Next, the flame exhaust frame 800 will be mainly described.

Referring to Figs. 14 and 15, the flame exhaust frame 800 is arranged so as to cover one surface of the module frame 200. The flame exhaust frame 800 is in a recessed shape in a direction opposite to the direction in which the one surface of the module frame 200 is located.

In one example, the flame exhaust frame 800 is similar to the structure in which one surface is opened in the mono frame. Further, at least one partition wall part 800W extending toward the opened surface may be formed in the flame exhaust frame 800.

Here, the partition wall part 800W may be integrated with the flame exhaust frame 800 or may be attached to the flame exhaust frame 800 by an adhesive method such as weld-joining. In one example, the partition wall part 800W may be made of the same material as the flame exhaust frame 800, or may be made of a material having heat resistance similar to that of the flame exhaust frame 800.

More specifically, the partition wall part 800W is extended from one surface of the flame exhaust frame 800 toward the opened surface, and the width of the partition wall part 800W may be equal to the thickness of the side surface of the flame exhaust frame 800.

Thereby, when an ignition event occurs in the battery module 100b, even if a flame and/or high-temperature gas is flowed into the flame exhaust frame 800, the flame and/or high-temperature gas flowed therein may move along the flow path of the passage part 800P formed by the partition wall part 800W. That is, the flame exhaust frame 800 may delay the speed at which the flame and/or high-temperature gas in the battery module 100b is exhausted.

However, the number, position, thickness and the like of the partition wall part 800W included in the flame exhaust frame 800 is not limited as illustrated in Figs. 14 and 15, and can be changed according to the flame exhaust effect by the flame exhaust frame 800.

In addition, the flame exhaust frame 800 may be formed with a flame exhaust port 800U, and the passage part 800P may extend to the flame exhaust port 800U. More specifically, in one side of the flame exhaust frame 800, the flame exhaust port 800U may be formed between the side surface of the flame exhaust frame 800 and the partition wall part 800W or between two partition wall parts 800W located adjacent to each other.

Thereby, the flame exhaust frame 800 is configured such that the flame and/or high-temperature gas flowed therein is exhausted to the outside of the battery module 100b, and may be exhausted in a direction guided by the flame exhaust port 800U.

More specifically, in the present embodiment, the flame exhaust frame 800 may be located on the upper plate 220. Here, one surface of the upper plate 220 may constitute an opened surface of the flame exhaust frame 800.

Thereby, the opened surface of the flame exhaust frame 800 can be replaced with one surface of the module frame 200, and thus the number of components of the flame exhaust frame 800 can be reduced. Further, the space utilization rate of the battery module 100b can be increased, and the weight of the flame exhaust frame 800 can also be reduced.

Further, in the present embodiment, at least one through hole 220H may be formed in the one surface of the module frame 200. In one example, the through hole 220H may be formed at a position corresponding to the passage part 800P formed by the at least one partition wall part 800W of the flame exhaust frame 800. That is, the through hole 220H may be formed between the side surface of the flame exhaust frame 800 and the partition wall part 800W or between two partition wall parts 800W located adjacent to each other.

However, the position of the through hole 220H is not limited thereto, and is not limited as long as it is a position that exhausts flames and/or high-temperature gas in the battery module 100b when an ignition event occurs in the battery module 100b, and can ensure durability and airtightness of the battery module 100b.

Thereby, the through hole 220H is formed in the upper plate 220, so that the flame and/or high-temperature gas in the battery module 100b can be flowed in the flame exhaust frame 800, when an ignition event occurs in the battery module 100b.

Further, the through hole 220H may include a first through hole 220H1 and a second through hole 220H2. That is, a first through hole 220H1 and a second through hole 220H2 may be formed on the one surface of the module frame 200, and the passage part 800P may extend from the first through hole 220H1 and the second through hole 220H2 to the flame exhaust port 800U.

The first through hole 220H1 may be located adjacent to the first end plate 410, and the second through hole 220H2 may be located adjacent to the second end plate 420. The first through hole 220H1 and the second through hole 220H2 may be located to be spaced apart along the x-axis direction. The contents concerning the first through-hole 220H1 and the second through-hole 220H2 overlap with those described above and thus are omitted.

Meanwhile, the battery module 100b according to the present embodiment may further include a flame extinguishing member 900 located between one surface of the module frame 200 and the flame exhaust frame 800. That is, the flame extinguishing member 900 may be located on a flame exhaust path of a flame and/or high-temperature gas moving from one surface of the module frame 200 to the flame exhaust frame 800.

In one example, the flame extinguishing member 900 may have a multi-layered flame extinguishing network structure. More specifically, the flame extinguishing member 900 may be formed by applying a flame extinguishing material to a multi-layered network structure. Here, the flame extinguishing material may include any one of substances such as flame extinguishing agents, aerogels, and the like. However, the present disclosure is not limited thereto, and any material having a flame extinguishing effect to remove a flame when an ignition event occurs in the battery module 100b is applicable.

Here, the flame extinguishing agent may be a substance in the form of a powder commonly used in the art. In one example, the flame extinguishing agent may be any one of sodium hydrogen carbonate (NaHCO₃), potassium hydrogen carbonate (KHCO₃), ammonium phosphate (NH₄H₂PO₃), and a mixture of "potassium hydrogen carbonate (KHCO₃) and urea ((NH₂)₂CO)". However, the flame extinguishing agent is not limited thereto, and any material that performs a flame extinguishing function can be used without limitation.

More specifically, in the present embodiment, the flame extinguishing member 900 may be located between the flame exhaust frame 800 and the upper surface of the upper plate 220 facing the flame exhaust frame 800. Here, the flame extinguishing member 900 may extend along the upper surfaces of the flame discharge frame 800 and the upper plate 220.

Thereby, when an ignition event occurs in the battery module 100b, the flame of the flame and/or high-temperature gas transferred to the flame exhaust frame 800 may be filtered through the flame extinguishing member 900 to be effectively removed. That is, the flame extinguishing member 900 can prevent the flame from being ejected to the outside of the battery module 100b, and prevent an additional event from occurring in the adjacent battery module 100b by the ejected flame.

Further, as described above, when the through hole 220H is formed in the upper plate 220, the through hole 220H may be in contact with the flame extinguishing member 900.

Thereby, when an ignition event occurs in the battery module 100b, the flame and/or high-temperature gas in the battery module 100b exhausted toward the passage part 800P of the flame exhaust frame 800 through the through hole 220H preferentially passes through the flame extinguishing member 900. That is, the flame extinguishing member 900 may be in direct contact with the flame and/or high-temperature gas exhausted from the inside of the battery module 100b, and may primarily remove the flame.

Further, one surface of the flame extinguishing member 900 may be in contact with the partition wall part 800W. In other words, the flame extinguishing member 900 may be in contact with the path of the passage part 800P divided by the partition wall part 800W of the flame exhaust frame 800. Further, due to the partition wall part 800W, the path formed by the passage part 800P may be bent and extended in plural numbers. Thereby, the area and/or time in which the flame extinguishing member 900 is in contact with the flame and/or high-temperature gas may be sufficiently secured. Moreover, the resistance of the flow path in the passage part 800P can be increased by the flame extinguishing member 900, thereby reducing the flow rate of the flame and/or high temperature gas flowing in the flame exhaust frame 800.

Particularly, even when the flame extinguishing member 900 primarily removes the flame and/or high-temperature gas exhausted from one surface of the module frame 200, the flame can be insufficiently removed depending on the degree of the ignition event of the battery module 100b. Here, the flame extinguishing member 900 is in contact with the path of the passage part 800P, so that the flame extinguishing member 900 may secondarily remove the remaining flame exhausted through the flow path.

Next, a heat sink formed at a lower portion of the battery module according to the present embodiment will be described.

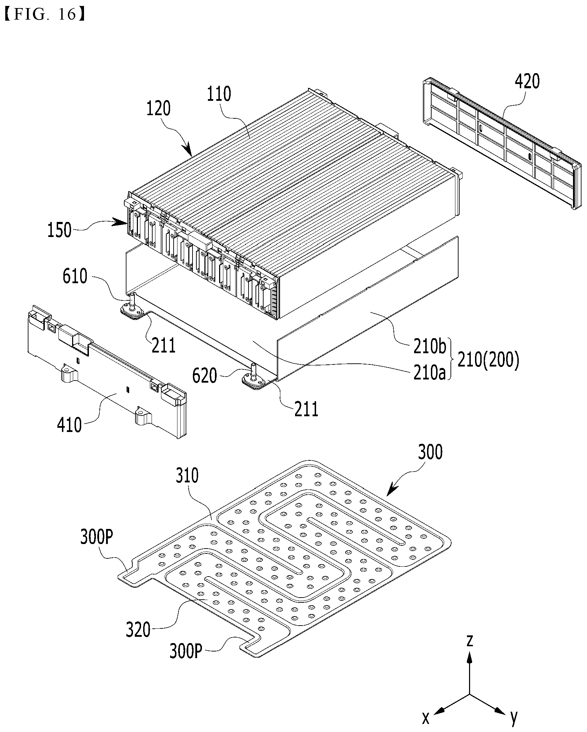

Fig. 16 is an exploded perspective view of a part of the battery module excluding the upper part in Fig. 15.

Referring to Figs. 14 to 16, the battery module 100b of the present embodiment may further include a heat sink 300 located below the bottom part 210a of the module frame 200. However, the heat sink 300 may be omitted in some cases.

The lower frame 210 of the module frame 200 will be mainly described below, but the structure of the module frame 200 is not limited to a U-shaped frame.

The module frame 200 may include module frame protrusions 211 protruding in one direction from the bottom part 210a of the module frame 200. A coolant injection port 610 for supplying a coolant to the heat sink may be formed in any one of the module frame protrusions 211, and a coolant discharge port 620 for discharging the coolant from the heat sink 300 may be formed in the other one of the module frame protrusions 211.

Specifically, the battery module 100b according to the present embodiment includes a coolant injection port 610 for supplying a coolant to the heat sink 300 and a coolant discharge port 620 for discharging the coolant from the heat sink 300. However, even if the positions of the coolant injection port 610 and the coolant discharge port 620 are reversed, they can be explained similarly.

The module frame protrusion 211 may include a first module frame protrusion and a second module frame protrusion located to be spaced apart from each other on one side of the lower frame 210, and the coolant injection port 610 may be arranged on the first module frame protrusion, and the coolant discharge port 620 may be arranged on the second module frame protrusion.

More specifically, the heat sink 300 may be located under the bottom part 210a. Here, the bottom part 210a may be in contact with the coolant supplied into the heat sink 300.

Further, as described above, the heat sink 300 may include a lower plate 310 joined to the bottom part 210a of the lower frame 210 and a depressed part 320 which is depressed downward from the lower plate 310.

Further, the heat sink 300 may include a heat sink protrusion 300P protruding from one side of the heat sink 300. Here, the heat sink protrusion 300P may be formed at a position corresponding to the module frame protrusion 211. In one example, the heat sink protrusion 300P and the module frame protrusion 211 may be directly coupled to each other by welding or the like.

The depressed part 320 may continue from one of the heat sink protrusions 300P to the other. The coolant supplied through the coolant injection port 610 passes between the module frame protrusion 211 and the heat sink protrusion 300P, and is first flowed into the space between the depressed part 320 and the bottom part 210a. Then, the coolant moves along the depressed part 320, passes between the other module frame projection 211 and the heat sink projection 300P, and is discharged through the coolant discharge port 620.

Further, in the present embodiment, the cooling integrated structure of the bottom part 210a and the heat sink 300 not only improves the above-mentioned cooling performance but also can have the effect of supporting the load of the battery cell stack 120 housed in the module frame 200 and reinforcing the rigidity of the battery module 100b. In addition, the heat sink 300 and the bottom part 210a are sealed through weld-coupling, and the like, so that in the depressed part 320 of the heat sink 300, the coolant can flow without leakage.

For effective cooling, as illustrated in Fig. 16, it is preferable that the depressed part 320 are formed over the entire area corresponding to the bottom part 210a. For this purpose, the depressed part 320 may be bent at least once to extend from one side to the other. Particularly, in order for the depressed part 340 to form over the entire area corresponding to the bottom part 210a, the depressed part 340 is preferably bent several times. As the coolant moves from the start point to the end point of the coolant flow path formed over the entire region corresponding to the bottom part 210a, efficient cooling can be performed over the entire region of the battery cell stack 120. Meanwhile, the coolant is a medium for cooling, and is not particularly limited, but may be cooling water.

Next, a flame exhaust path when an ignition event occurs in the battery module according to an embodiment of the present disclosure will be described.

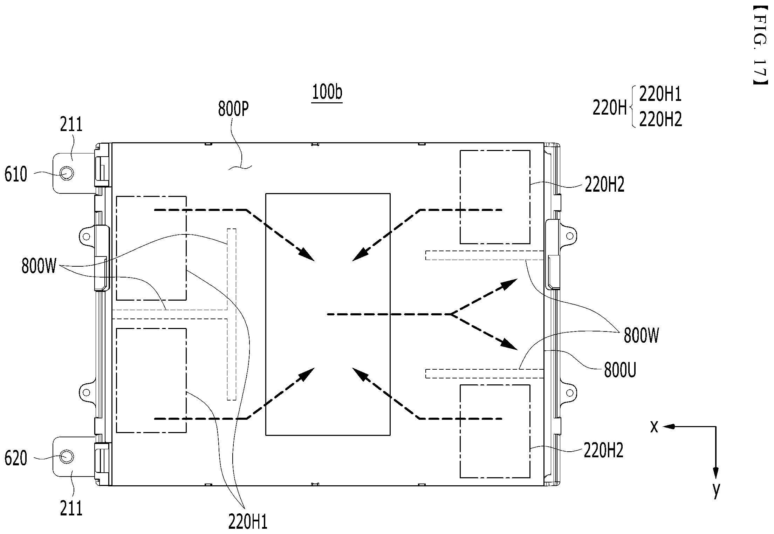

Fig. 17 is a top view which shows an upper portion of the battery module of Fig. 14.

Referring to Figs. 14, 15 and 17, when an ignition event occurs in the battery module 100b according to the present embodiment, the flame and/or high-temperature gas generated in the battery module 100b may be exhausted toward the flame exhaust frame 800 through the through hole 220H. Here, at least one partition wall part 800W is formed in the flame exhaust frame 800, so that the flame and/or high-temperature gas flowed into the flame exhaust frame 800 can be blocked from moving at a position where the partition wall part 800W is formed. In other words, the flame and/or high-temperature gas flowed into the flame exhaust frame 800 may move to a position where the partition wall part 800W is not formed.

Further, the flame exhaust frame 800 includes a flame exhaust port 800U that is opened toward the outside, and the position adjacent to the flame exhaust port 800U has the same pressure as the external pressure, so that the pressure may be relatively low. Unlike the same, at a position adjacent to the through hole 220H, the pressure may be high due to the flame and/or high-temperature gas generated in the battery module 100b. That is, the flame and/or high-temperature gas flowed into the flame exhaust frame 800 may be exhausted toward the flame outlet 800U due to a pressure difference depending on the position. In one example, the partition wall part 800W is formed at a position adjacent to the flame exhaust port 800U, so that the flame and/or high-temperature gas flowing into the flame exhaust frame 800 can be guided to move toward the flame exhaust port 800U.

Thereby, when an ignition event occurs in the battery module 100b according to the present embodiment, the flame and/or high-temperature gas in the battery module 100b can be effectively exhausted to the outside through the flame exhaust path via the flame exhaust frame 800.

Further, referring to Figs. 15 and 17, the flame discharge port 800U may be of a shape that is opened toward one direction and the opposite direction from which the module frame protrusion 211 protrudes. In other words, the flame exhaust port 800U may be formed adjacent to the opposite surface of one surface of the lower frame 210 in which the coolant injection port 610 and the coolant discharge port 620 are located.

Thereby, when the ignition event occurs in the battery module 100b, the flame exhaust port 800U can minimize the influence on the coolant flow path of the heat sink 300 integrated in the lower portion of the battery module 100b and also can exhaust the flame and/or high-temperature gas inside the battery module 100b.

In addition, although not specifically illustrated, when the battery module 100b according to the present embodiment is mounted on a pack frame (not shown), the module frame protrusions 211 are mounted in directions facing each other, so that a flow path through which the coolant is injected or discharged may be arranged between the battery modules 100b.

In this case, the flame exhaust port 800U is formed adjacent to the opposite surface of the one surface on which the module frame protrusion 211 is formed, so that the flame and/or high-temperature gas exhausted from the flame exhaust port 800U may be exhausted toward a pack frame (not shown). That is, even if the flame discharge port 800U exhausts the flame and/or high-temperature gas in the battery module 100b, it is possible to prevent the flame and/or high-temperature gas exhausted from the flame exhaust port 800U from being exhausted toward the other battery module 100b.

Therefore, even if an ignition event occurs in some battery modules 100b and the flame and/or high-temperature gas is exhausted into the pack frame (not shown) through the flame exhaust port 800U, it is possible to prevent the flame and/or high temperature gas from being transmitted to the other battery module 100b.

Next, a battery module 100c according to another embodiment of the present disclosure will be described.

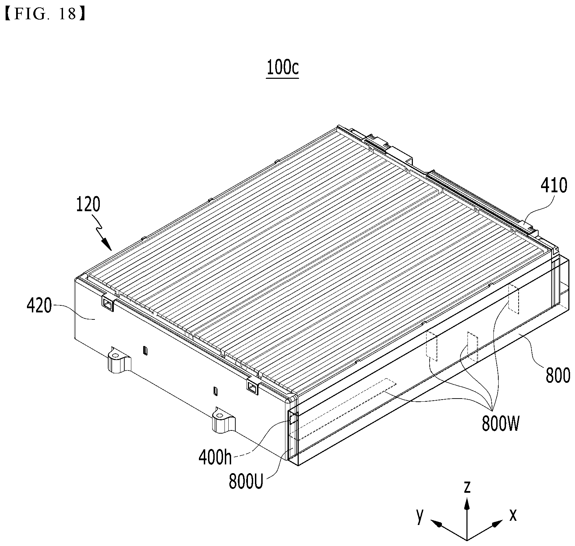

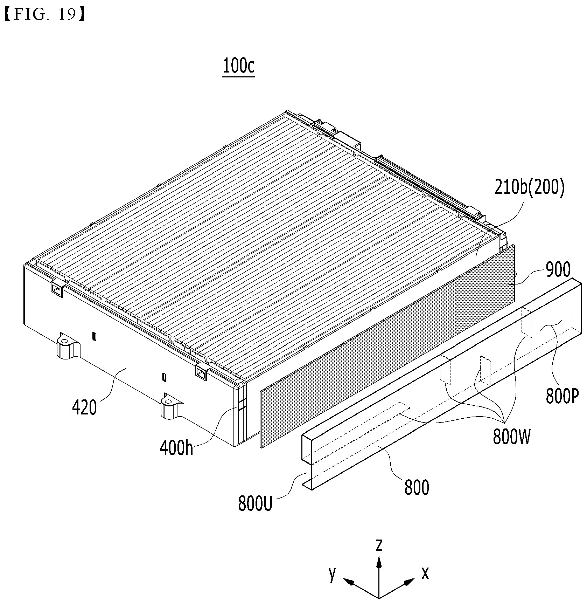

Fig. 18 is a perspective view of a battery module according to another embodiment of the present disclosure. Fig. 19 is an exploded perspective view which shows a side surface of the battery module of Fig. 18. However, different points will be mainly described based on the battery module 100b according to the above-mentioned embodiments, and other features may be described the same or similar manner as described with respect to previously described embodiments.

Referring to Figs. 18 and 19, unlike the embodiments described above, the flame exhaust frame 800 of the present embodiment may be located on the side surface part 210b of the module frame 200.

A passage part 800P is formed between the flame exhaust frame 800 and one surface of the module frame 200, and the passage part 800P extends to the flame exhaust port 800U formed in the flame exhaust frame 800. That is, in the present embodiment, one surface of the module frame 200 corresponds to the side surface part 210b of the module frame 200. In addition, the partition wall part 800W may be formed in the flame exhaust frame 800.

However, the number, position, thickness, and the like of the partition portion 800W included in the flame exhaust frame 800 is not limited, and can be changed according to the flame exhaust effect by the flame exhaust frame 800.

At this time, the flame exhaust frame 800 according to the present embodiment may extend to the side surface of the first end plate 410 and the side surface of the second end plate 420. In one example, the flame exhaust frame 800 is extended along the side surface of the first and second end plates 410 and 420, and can extend to outer surfaces of the first and second end plates 410 and 420.

Further, a through hole 400h may be formed to at least one part of a side surface of the first end plate 410 or a side surface of the second end plate 420, and the passage part 800P may extend from the through hole 400h to the flame outlet 800U. In one example, the through hole 400h may be formed at a position corresponding to the path of the passage part 800P of the flame exhaust frame 800. Further, the through hole 400h is formed in at least one of the side surface of the first end plate 410 or the side surface of the second end plate 420, and may be formed between the side surface of the flame exhaust frame 800 and the partition wall part 800W or between two partition wall parts 800W located adjacent to each other.

However, the position of the through hole 400h is not limited thereto, and is not limited as long as it is a position that can easily exhaust the flame and/or high-temperature gas in the battery module 100c when an ignition event occurs in the battery module 100c, and can ensure durability and airtightness of the battery module 100c.

Thereby, at least one through hole 400h that is opened toward the flame exhaust frame 800 is formed on the side surfaces of the first and second end plates 410 and 420, so that when an ignition event occurs in the battery module 100c, a flame and/or a high-temperature gas in the battery module 100c may be easily flowed into the flame exhaust frame 800.

In addition, the battery module may further include a flame extinguishing member 900 located between the one surface of the module frame 200, that is, the side surface part 210b and the flame exhaust frame 800. That is, the flame extinguishing member 900 may be located on a flame exhaust path of a flame and/or a high-temperature gas moving from one surface of the side surface part 210b to the flame exhaust frame 800.

In addition, as described above, when the through hole 400h is formed on the side surfaces of the first and second end plates 410 and 420, the through hole 400h may be in contact with the flame extinguishing member 900.

Thereby, when an ignition event occurs in the battery module 100c, the flame and/or high-temperature gas in the battery module 100c exhausted toward the flame exhaust frame 800 via the through-hole 400h preferentially passes through the flame-retardant member 900. That is, the flame extinguishing member 900 can be in direct contact with the flame and/or high-temperature gas exhausted from the inside of the battery module 100c to primarily remove the flame.

Next, when an ignition event occurs in the battery module 100c according to another embodiment of the present disclosure, the flame exhaust path will be described.

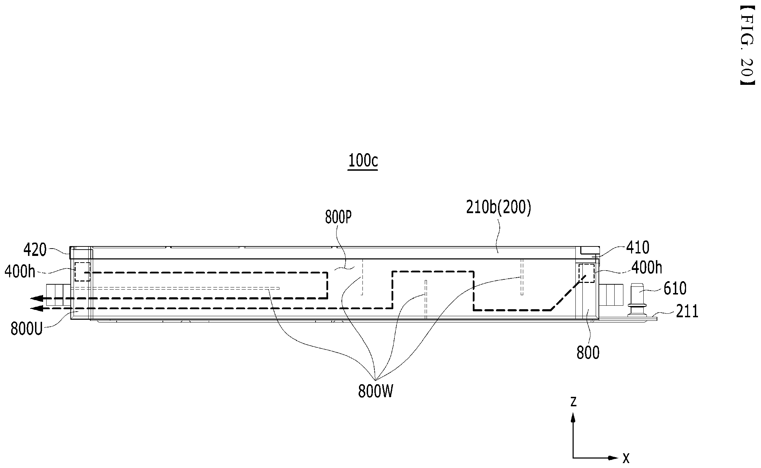

Fig. 20 is a side view which shows a side surface of the battery module of Fig. 18.

Referring to Figs. 18 to 20, when an ignition event occurs in the battery module 100c according to the present embodiment, the flame and/or high-temperature gas generated in the battery module 100c may be exhausted toward the flame exhaust frame 800 via the through hole 400h. Here, at least one partition wall part 800W is formed in the flame discharge frame 800, and the flame and/or high-temperature gas flowed into the flame exhaust frame 800 may be blocked from moving at a position where the partition wall part 800W is formed. In other words, the flame and/or high-temperature gas flowed into the flame exhaust frame 800 may move to a position where the partition wall part 800W is not formed.

Further, the flame exhaust frame 800 includes a flame exhaust port 800U that is opened to the outside, and a position adjacent to the flame outlet 800U has the same pressure as the external pressure. That is, the pressure may be relatively low. Unlike the same, in a position adjacent to the through hole 400h, the pressure may be high due to the flame and/or high-temperature gas generated in the battery module 100c. That is, the flame and/or the high-temperature gas flowed into the flame exhaust frame 800 may be exhausted toward the flame outlet 800U due to a pressure difference depending on the location. In one example, the partition wall part 800W is formed in a position adjacent to the flame exhaust port 800U, and the flame and/or high-temperature gas flowed into the flame exhaust frame 800 may be guided to move toward the flame exhaust port 800U.

Thereby, through the flame exhaust path via the flame exhaust frame 800, the flame and/or high-temperature gas in the battery module 100c can be effectively exhausted to the outside.

Further, referring to Figs. 19 and 20, the flame exhaust port 800U may be of a shape that is opened toward one direction and the opposite direction from which the module frame protrusion 211 protrudes. That is, in other words, the flame exhaust port 800U may be formed adjacent to the opposite surface of one surface of the lower frame 210 in which the coolant injection port 610 and the coolant discharge port 620 are located. A detailed description thereof will be omitted because it overlaps with the contents described above.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

The present disclosure has been described in detail with reference to exemplary embodiments thereof, but the scope of the present disclosure is not limited thereto and modifications and improvements made by those skilled in the part by using the basic concept of the present disclosure, which are defined in the following claims, also belong to the scope of the present disclosure.

### [Description of Reference Numerals]

100: battery module
200: module frame
800: flame exhaust frame
800P: passage part
800U: flame exhaust port

## Claims

1. A battery module comprising:
a battery cell stack in which a plurality of battery cells are stacked;
a module frame that houses the battery cell stack; and
a flame exhaust frame arranged so as to cover one surface of the module frame,
wherein the flame exhaust frame is formed in a recessed shape in a direction opposite to the direction in which the one surface of the module frame is located, and
wherein a passage part is formed between the flame exhaust frame and the one surface of the module frame, and the passage part extends to a flame exhaust port formed in the flame exhaust frame.

2. The battery module according to claim 1 wherein:
a through hole is formed in the one surface of the module frame, and
the passage part extends from the through hole to the flame exhaust port.

3. The battery module according to claim 2, further comprising:
a flame extinguishing member that is located between the one surface of the module frame and the flame exhaust frame,
wherein the through hole is in contact with the flame extinguishing member.

4. The battery module according to claim 1 wherein:
the passage part is bent at least once to extend to the flame exhaust port.

5. The battery module according to claim 1 wherein:
the module frame has a shape in which both sides facing each other are opened, and
a first end plate and a second end plate are respectively arranged to cover the open both sides of the module frame.

6. The battery module according to claim 5 wherein:
a first through hole and a second through hole are formed in the one surface of the module frame,
the passage part extends from the first through hole and the second through hole to the flame outlet, and
the first through hole is located adjacent to the first end plate, and the second through hole is located adjacent to the second end plate.

7. The battery module according to claim 5 wherein:
the battery cell includes electrode leads,
any one of the electrode leads protrudes toward the first end plate, and the other of the electrode leads protrudes toward the second end plate.

8. The battery module according to claim 5 wherein:
the flame exhaust frame extend to a side surface of the first end plate and a side surface of the second end plate.

9. The battery module according to claim 8 wherein:
a through hole is formed to at least one part of a side surface of the first end plate or a side surface of the second end plate, and
the passage part extends from the through hole to the flame exhaust port.

10. The battery module according to claim 9, further comprising:
a flame extinguishing member that is located between the one surface of the module frame and the flame exhaust frame,
wherein the through hole is in contact with the flame extinguishing member.

11. The battery module according to claim 1 wherein:
a partition wall part is formed to at least one part of the flame exhaust frame or the one surface of the module frame, and
a path formed by the passage part extends while being bent in plural numbers by the partition wall part.

12. The battery module according to claim 1, further comprising:
a flame extinguishing member that is located between the one surface of the module frame and the flame exhaust frame,
wherein the flame extinguishing member has a multi-layered flame extinguishing network structure.

13. The battery module according to claim 1, further comprising:
a heat sink located below the bottom part of the module frame,
wherein a flow path through which a coolant flows is formed between the bottom part of the module frame and the heat sink.

14. The battery module according to claim 13 wherein:
the module frame includes module frame protrusions that protrude in one direction from the bottom part of the module frame,
a coolant injection port for supplying a coolant to the heat sink is formed in any one of the frame protrusions, and
a coolant discharge port for discharging the coolant from the heat sink is formed in the other one of the module frame protrusion parts.

15. The battery module according to claim 14 wherein:
the flame exhaust port is formed in an opened shape in a direction opposite to the one direction in which the module frame protrusion protrudes.

16. A battery pack comprising the battery module as set forth in claim 1.
